(19) **Europäisches Patentamt / European Patent Office / Office européen des brevets**

(11) **EP 3 593 120 B1**

(12) # EUROPÄISCHE PATENTSCHRIFT

(45) Veröffentlichungstag und Bekanntmachung des Hinweises auf die Patenterteilung:
**06.01.2021   Patentblatt 2021/01**

(21) Anmeldenummer: **18717824.9**

(22) Anmeldetag: **09.03.2018**

(51) Int Cl.:
**G01N 21/45** *(2006.01)*   **B82Y 20/00** *(2011.01)*
**G01N 21/552** *(2014.01)*   **G02B 5/00** *(2006.01)*

(86) Internationale Anmeldenummer:
**PCT/DE2018/100215**

(87) Internationale Veröffentlichungsnummer:
**WO 2018/162008 (13.09.2018 Gazette 2018/37)**

(54) **ANORDNUNG UND VERFAHREN FÜR DIE ERFASSUNG VON ÄNDERUNGEN DER OPTISCHEN WEGLÄNGE IN EINEM NANO-KAPILLARKANAL**

ASSEMBLY AND METHOD FOR DETECTING CHANGES TO THE OPTICAL PATH LENGTH IN A NANO CAPILLARY CHANNEL

SYSTÈME ET PROCÉDÉ POUR DÉTECTER DES VARIATIONS DE LONGUEUR DE TRAJET OPTIQUE DANS UN CANAL NANOCAPILLAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2017   DE 102017105113**

(43) Veröffentlichungstag der Anmeldung:
**15.01.2020   Patentblatt 2020/03**

(73) Patentinhaber: **Leibniz-Institut für Photonische Technologien e.V.**
**07745 Jena (DE)**

(72) Erfinder:
  • **HENKEL, Thomas**
    **07751 Jena (DE)**
  • **GARWE, Frank**
    **99817 Eisenach (DE)**
  • **MAYER, Günter**
    **07745 Jena (DE)**
  • **CSAKI, Andrea**
    **07774 Camburg (DE)**
  • **FRITZSCHE, Wolfgang**
    **99096 Erfurt (DE)**
  • **HÜBNER, Uwe**
    **07646 Ruttersdorf-Lotschen (DE)**
  • **DATHE, Andre**
    **07745 Jena (DE)**
  • **SCHMIDL, Gabriele**
    **07743 Jena (DE)**

(74) Vertreter: **Donath, Dirk**
    **Patent- und Rechtsanwälte Bock Bieber Donath**
    **Hans-Knöll-Strasse 1**
    **07745 Jena (DE)**

(56) Entgegenhaltungen:
**US-A1- 2015 103 347**

  • **TAN Y ET AL: "Gold-Nanoparticle-Infiltrated Polystyrene Inverse Opals: A Three-Dimensional Platform for Generating Combined Optical Properties", CHEMISTRY OF MATERIALS, Bd. 18, Nr. 15, 26. Januar 2006 (2006-01-26), Seiten 3385-3389, XP055479049, ISSN: 0897-4756, DOI: 10.1021/cm060207c**
  • **FENG J ET AL: "A spectroscopic refractometer based on plasmonic interferometry", JOURNAL OF APPLIED PHYSICS, AMERICAN INSTITUTE OF PHYSICS, US, Bd. 119, Nr. 8, 28. Februar 2016 (2016-02-28), XP012205410, ISSN: 0021-8979, DOI: 10.1063/1.4942013**
  • **WIRTH J ET AL: "Tuning of Spectral and Angular Distribution of Scattering from Single Gold Nanoparticles by Subwavelength Interference Layers", NANO LETTERS, Bd. 14, Nr. 2, 13. Januar 2014 (2014-01-13), Seiten 570-577, XP055479046, ISSN: 1530-6984, DOI: 10.1021/nl4037438**

EP 3 593 120 B1

**Beschreibung**

Die Erfindung betrifft eine Anordnung und ein Verfahren für die Erfassung von Änderungen der optischen Weglänge in einem Nano-Kapillarkanal, insbesondere für die präzise, lokalisierte Erfassung von Nano-Volumenelementen im Kapillarkanal mit einer Positionsgenauigkeit bis in den Sub-Mikrometerbereich unter Überwindung des für konventionelle optische Mikroskopie geltenden Abbe-Limits.

Vorbekannt ist die Analyse der Mobilität analytischer Spezies als Gegenstand der Fluoreszenz-Korrelations-Spektroskopie (FSC).

Die EP 0 679 251 B1 bspw. offenbart die Prinzipien der Fluoreszenz-Korrelations-Spektroskopie, welche u.a. in den Schriften WO 02/097406 A1 und WO 2008/077642 A2, WO 2005/040771 A1 Verwendung finden.

FCS wird genutzt, um molekülspezifische Parameter von Partikeln mittels einer Fluoreszenzmessung zu bestimmen. Diese Parameter können bspw. Translationsdiffusionskoeffizienten, Rotationsdiffusionskoeffizienten, Reaktionsraten, Emissionswellenlänge und die Lebenszeiten von angeregten Zuständen lumineszierender Moleküle oder die Kombination von diesen gemessenen Parametern sein.

Ebenfalls können mit der FCS chemische und photophysikalische dynamische Eigenschaften individueller Moleküle (siehe Rigler, R., Elson, "Fluorescence Correlation Spectroscopy, Theory and Applicatons", Springer- Verlag, Berlin Heidelberg, New York 2001) untersucht werden. Hierfür wird die Durchtrittzeit fluoreszenzmarkierter analytischer Spezies durch ein möglichst kleines Anregungsvolumen (minimale Größe begrenzt durch das konfokale Anregungsvolumen) anhand der zeitlichen Änderung des emittierten Fluoreszenzsignals gemessen. Unter Verwendung von Korrelationsalgorithmen sind aus diesen Rohdaten Informationen zu Konzentration, Größe (Mobilität) und Bindungskonstanten für die Bindung fluoreszenzmarkierter Sonden an Bindungspartner zugänglich.
Diese Informationen werden für die Realisierung von Bindungsassays für die Medikamentenentwicklung und die Schaffung optisch auslesbarer Bindungsassays für die Diagnostik genutzt.

Dabei weist das Verfahren der Fluoreszenz-Korrelations-Spektroskopie folgende Einschränkungen und Nachteile auf:
Bei dem Verfahren der FCS besteht prinzipiell keine Korrelation zwischen der Phase des Anregungslichtes und der Phase des fluoreszierenden Detektionslicht, so dass diese auch nicht ausgewertet werden kann.

Die FCS erfordert zwingend die Verwendung / Beteiligung mindestens einer Fluoreszenz-aktiven Spezies. Damit ist dieses Verfahren hinsichtlich seiner Anwendbarkeit auf die Untersuchung fluoreszierender bzw. fluoreszenzmarkierter Moleküle, molekularer Komplexe und Nanostrukturen begrenzt.

Weiterhin kann eine Markierung der analytischen Spezies die intrinsischen Eigenschaften des Moleküls bzw. der analytischen Spezies ändern.

Darüber hinaus bestehen bei der Fluoreszenz-Korrelations-Spektroskopie Beschränkungen der Parallelisierbarkeit. Für die FCS wird ein speziell erweitertes Fluoreszenzmikroskop verwendet. An einem Mikroskop gibt es üblicherweise nur eine einzige Messposition, d.h. man arbeitet mit einem Laser- Spot, einem APD- Detektor und einem Pinhole. Damit sind der Parallelisierbarkeit enge Grenzen gesetzt, weil man für jeden weiteren Messpunkt einen vollständigen weiteren Messaufbau benötigt.

Aus der Offenbarung der EP 2 853 931 A1 ist weiterhin die Verwendung von Fabry-Perot-Interferometern bekannt. Bei der Detektion mittels Fabry-Perot-Schichten, bei denen zwei ortsfest zueinander liegende, möglichst hochreflektierende Spiegel das eingestrahlte Licht wellenlängenresonant transmittieren bzw. reflektieren, lassen sich bei hoher Finesse auch geringe Brechungsindexunterschiede im Medium zwischen den Schichten messen. Aufgrund der Auflösungsbegrenzung (Abbe Limit) ergibt sich der effektive Brechungsindex als Mittelwert über das erfasste Volumen dessen Größe anhand des Schichtabstandes und der Wellenlänge des Lichtes wie folgt abgeschätzt werden kann: (Schichtabstand 200 nm x 250 nm x 250 nm). Gegenüber diesem Volumen kleine Objekte, wie große Proteine, Vesikel oder Viren im Größenbereich von 30 nm zeigen gemittelt über das große Volumen daher nur eine sehr kleine Brechungsindexänderung. Dadurch werden solche Systeme für die Detektion der zuvor stehend genannten Objekte sehr unempfindlich, was von Nachteil ist.

Auch interferometrische Standard-Detektionsmethoden, wie bspw. durch die EP 1 210 581 B1 offenbart, weisen diesen Nachteil auf.

Die vorstehend beschriebenen Probleme treten verstärkt an diffraktionsbasierten Sensoren von Analyten auf, wo bspw. Blochwellen-Propagation an der Oberfläche von dielektrischen Multilayern, wie bspw. von EP 2 331 958 B1 offenbart, überhaupt erst möglich wird, wenn größere makroskopische Flächen (keine sub-Wellenlängen Objekte) existieren.

Auch Sensoren, welche z.B. auf dem Prinzip der bimodalen optischen Wellenleitung (siehe bspw. EP 2 017 602 B1) oder der Totalreflektion (siehe bspw. EP 1 701 152 A2) der evaneszenten Wellendetektion (siehe bspw. EP 1 602 917 A2) oder der Oberflächenplasmonenresonanz (siehe bspw. EP 1 581 800 B1 und EP 0 863 395 B1) bzw. Oberflächenplasmonenpolarisationsbandlückenstrukturen (siehe EP 1 305 659 B1) basieren, sehen sich mit dem oben beschriebenen Begrenzungen und Nachteilen konfrontiert.

Eine weitere Alternative für die ortsaufgelöste Vermessung kleiner Spezies bietet das physikalische Prinzip der Änderung der Lokalisierten-Oberflächen-Plasmonenresonanz (LSPR) (bekannt bspw. aus WO 2010/136440 A1 und US 8 426 152 B2) mit einer Änderung des Brechungsindexes in der direkten Umgebung bis zu einem Abstand von ca. 10 nm, abhängig von der Partikelgröße) von plasmonischen Nanopartikeln.

Nachteilig bei dieser technischen Lösung ist, dass die zu untersuchenden Objekte nicht an den plasmonischen Nanopartikeln in einer Entfernung größer 100 nm in einer Messzelle vorbei strömen können, denn die LSPR erfordert eine direkte Bindung der zu analysierenden Spezies an die Oberfläche des meistens ortsfest auf einer Oberfläche immobilisierten plasmonischen Nanopartikels. Wegen der geringen erforderlichen Entfernungen (bis zu ca. 10 nm), bei denen Brechungsindexänderungen durch bindende Moleküle die Plasmonenresonanz eines Nanopartikels messbar verschieben können selbige nur in unmittelbarer Nähe zur Oberfläche des Nanopartikels detektiert werden. Selbst bei unmittelbarer Anbindung an der Oberfläche können nur kleine Objekte < 10 nm vollständig erfasst werden. Größere Proteine, Zellbestandteile (Vesikel, wie Endosomen, Exosomen) oder Viren können mit LSPR in der Praxis nicht oder nur schwer quantitativ detektiert werden, weil schnell eine Sättigung der Bindungsfähigkeit erreicht wird.

Auch die Nutzung der an die Mobilität der Objekte (z.B. Brownsche Molekularbewegung) geknüpften Information ist mit dem Verfahren des LSPR nicht möglich.

Eine direkte Kopplung von propagierenden Plasmonenmoden mit LSPR-Moden, welche zu hybriden Moden führt (bekannt aus EP 2 840 383 A1 bzw. US 2015/103317 A1) setzt sehr geringe Abstände kleiner als 20 nm voraus. Somit funktioniert dieses Messprinzip auf der Basis der Kopplung von evaneszenten Wellen. Alle Analyt- Objekte, welche sich in einer größeren Entfernung als 20 nm von der metallischen Nanostrukturoberfläche befinden, können dadurch nicht detektiert werden. Auf diesem Prinzip basierende Sensoren können somit nur die mittlere Brechungsindexänderung in der unmittelbaren Umgebung bzw. direkt bindende Analyt- Objekte detektieren.

In dem Artikel "Gold-Nanoparticle-Infiltrated Polystyrene Inverse Opals: A Three-Dimensional Platform for Generating Combined Optical Properties", Chem. Mater. 2006, 18, beschreiben Tan et al. dünne Schichten mit inverser Opalstruktur, eingebettet in einen Analysechip in Fluidtechnologie.

In dem Artikel "A spectroscopic refractometer based on plasmonic interferometry", Journal of Applied Physics 119, 083104 (2016), beschreiben Feng und Pacifici ein spektroskopisches Refraktometer, das die plasmonische Interferometrie zur Messung der optischen dielektrischen Funktionen von Materialien im sichtbaren Bereich einsetzt. Plasmonische Interferogramme werden erzeugt, indem Lichttransmissionsspektren durch Schlitze von Schlitz-Nut-Plasmon-Interferometern gemessen werden.

In dem Artikel "Tuning of Spectral and Angular Distribution of Scattering from Single Gold Nanoparticles by Subwavelength Interference Layers", Nano Lett. 2014, 14 (2), beschreiben Wirth et al. die Interferenzmodulation des von einer Nanostruktur gestreuten Lichts, wobei einfallendes elektrisches Licht durch eine Abstandshalterschicht zwischen Nanopartikel und einer einer Goldschicht durch Interferenz moduliert wird.

Die Aufgabe der Erfindung ist die Bereitstellung einer Anordnung und eines Verfahrens für die Erfassung von Änderungen der optischen Weglänge in einem Kapillarkanal, welche die zuvor stehend aufgeführten Nachteile des Standes der Technik vermeiden. Dabei sollen die den Messverfahren der Fluoreszenz-Korrelationsspektroskopie zu Grunde liegenden Ansätze und Algorithmen Fluoreszenz-markierter Spezies auf die Untersuchung und Vermessung unmarkierter Spezies erweitert und gleichzeitig die bestehenden Begrenzungen hinsichtlich der Parallelisierbarkeit überwunden werden, wobei präzise, lokalisierte Auflösungen der Detektion bis in den Sub-Mikrometerbereich und Sub-Abbe-Limit-Bereich möglich sind. Des Weiteren soll gleichzeitig eine Korrelation zwischen Anregungslicht und Detektionslicht nutzbar gemacht werden.

Erfindungsgemäß wird diese Aufgabe durch die Merkmale des 1. und 3. Patentanspruchs gelöst. Weitere günstige Ausgestaltungsmöglichkeiten der Erfindung sind in den nachgeordneten Patentansprüchen angegeben.

Das Wesen der Erfindung besteht in der Bereitstellung einer Anordnung und eines Verfahrens für die Erfassung von Änderungen der optischen Weglänge in einem Kapillarkanal, welche die Änderung eines interferierenden Streulichtspektrums nutzen, in dem sich das von plasmonischen Nanostrukturen resonant direkt zu einem Dunkelfeld-Objektiv gestreute Licht mit dem zum Kapillarkanal gestreuten und an einer im Kapillarkanal befindlichen reflektierenden Fläche zurückgeworfenen Licht konstruktiv überlagert.

Dabei ermöglicht die Streulichtdetektion eine Nutzung der Korrelation zwischen Anregungslicht und Detektionslicht.

Das Verfahren umfasst die Erfassung

- von Partikeln in einem Fluid, welches sich im Kapillarkanal befindet,
- die Veränderungen der Eigenschaften eines Fluides, wie bspw. dessen Zusammensetzung oder dessen Druck, sowie auch
- ein Erfassen von mechanischem Einwirken auf den Kapillarkanal.

Ein Fluid in Sinne der Erfindung ist jede Flüssigkeit und auch jedes Gas mit einem homogenen optischen Brechungsindex, wie bspw. reines Wasser.

Partikel in Sinne der Erfindung sind Nano-Volumenelemente, NanoPartikel, supermolekulare Strukturen, nanoskalige Objekte, analytische Spezies und Moleküle, deren größte Ausdehnung vorzugsweise zwischen 5 und 50 nm liegt, die nicht größer als die Höhe des Kapillarkanals sind und die einen anderen Brechungsindex als das Fluid besitzen.

Ein Kapillarkanal im Sinne der Erfindung ist ein Kanal der Mikrofluid-Technologie mit einer Höhe von einem Teil bis zu einigen Vielfachen der Wellenlänge des verwendeten Anregungslichtes.

Das Messprinzip basiert auf der Erfassung der Änderung eines interferierenden Streulichtspektrums. Dabei wird das von plasmonischen Nanostrukturen resonant direkt zum Dunkelfeld-Objektiv gestreute Licht mit dem zum Kapillarkanal gestreuten und an einer im Kapillarkanal befindlichen reflektierenden Fläche zurückgeworfenem Licht konstruktiv überlagert.

Die plasmonischen Nanostrukturen besitzen eine Resonanzfrequenz bzw. eine Resonanzwellenlänge, für die ein Maximum an Licht ausgestreut wird. Diese Resonanzwellenlänge liegt innerhalb des Wellenlängenbereiches des Anregungslichtes von 330 nm bis 1050 nm, für das diese Anordnung konzipiert ist. Die plasmonischen Nanostrukturen streuen das Licht relativ breitbandig in einem Wellenlängenbereich um die Resonanzwellenlänge herum, der von der Art des verwendeten Materials in den plasmonischen Nanostrukturen abhängig ist und eine Bandbreite des Streulichtes von bspw. 50 nm haben kann.

Wird weißes Anregungslicht verwendet, so wird für die Resonanzfrequenz ein Maximum an Licht gestreut und innerhalb der Bandbreite des Streulichtes der plasmonischen Nanostrukturen eine in der Praxis noch gut auswertbare Lichtmenge gestreut.

Wird monochromatisches oder polychromatisches Anregungslicht verwendet, so müssen die verwendeten Wellenlängen innerhalb der Bandbreite des Streulichtes plasmonischen Nanostrukturen liegen, damit eine in der Praxis noch gut auswertbare Lichtmenge gestreut wird.

Die Länge des Weges des gestreuten Lichtes von den plasmonischen Nanostrukturen als Lichtquelle bis zur reflektierenden Fläche im Kapillarkanal beträgt unter Berücksichtigung der optischen Brechungsindices etwa das 0,5-fache oder das N * 0,5 -fache der Wellenlänge, für die sich eine Maximum der konstruktiven Interferenz zwischen dem zum Kapillarkanal gestreuten und dem an der reflektierenden Fläche im Kapillarkanal zurückgeworfenen Licht ergibt (N sei die Anzahl voller Wellenlängen, N als Ganzzahl >= 1, Erläuterung weiter unten). Wird diese optische Weglänge verändert, verändert sich die Wellenlänge für die maximale konstruktive Interferenz des Lichtes im Bereich zwischen den Nanostrukturen und der reflektierenden Fläche, was mit einer spektralen Verschiebung des Maximums des Streulichtes einhergeht.

Die Wellenlänge für die maximale konstruktive Interferenz soll gleich oder nahezu gleich der Resonanzwellenlänge der plasmonischen Nanostrukturen sein und jedenfalls innerhalb des Wellenlängenbereiches des Streulichtes der plasmonischen Nanostrukturen liegen, um ein Maximum an Streulicht nutzen zu können.

Erfasst wird das resultierende interferierende Streulicht aus dem direkt von den plasmonischen Nanostrukturen gestreuten Licht und dem Streulicht aus der konstruktiven Interferenz zwischen den plasmonischen Nanostrukturen und reflektierenden Fläche.

Wird als Anregungslicht weißes Licht verwendet, so bewirkt die Verschiebung der Interferenzbedingungen eine Farb- und Helligkeitsveränderung des resultierenden interferierenden Streulichtspektrums.

Wird als Anregungslicht monochromatisches Licht verwendet, so bewirkt die Verschiebung der Interferenzbedingungen eine Helligkeitsänderung des resultierenden Streulichtes. In diesem Fall wird die Korrelation der Phasenlage zwischen Anregungslicht und Detektionslicht auswertbar, die mit der Änderung der optischen Weglänge einhergeht.

Die Änderung der optischen Weglänge von den plasmonischen Nanostrukturen bis zur reflektierenden Fläche im Kapillarkanal kann durch unterschiedliche Einflüsse erfolgen, die erfasst und ausgewertet werden können. Eine Änderung kann erfolgen durch:

- eine Veränderung des Brechungsindex des Fluides im Kapillarkanal durch die Veränderung der chemischen Zusammensetzung des Fluides;
- eine Veränderung des Brechungsindex im Kapillarkanal durch das Auftreten, die Bewegung oder die Veränderung von Partikeln im Fluid, wobei die Partikeln einen anderen optischen Brechungsindex besitzen als das Fluides;
- eine Veränderung des Brechungsindex des Fluides im Kapillarkanal durch die Veränderung der physikalischen Bedingungen, zum Beispiel durch die Veränderung des Drucks und/oder der Temperatur des Fluides;
- eine Veränderung der Höhe des Kapillarkanals durch physikalische Einwirkungen, zum Beispiel als Druck/Zug auf das Trägermedium des Kapillarkanals im Rahmen der Elastizität des Medienmaterials;
- durch eine Kombination der oben genannten Veränderungen.

Die Anordnung für die Erfassung von Änderungen der optischen Weglänge in einem Kapillarkanal umfasst einen Mehrlagenchip mit einem Kapillarkanal in Mikrofluid-Technologie. Die für den Betrieb notwendige Dunkelfeld-Konfiguration, die eine Dunkelfeld-Lichtquelle umfasst, das Dunkelfeld-Mikroskop sowie der Zu- und Abfluss in und aus dem Kapillarkanal des Mehrlagenchips sind aus dem Stand der Technik bekannt. Statt des Dunkelfeld-Mikroskops können auch andere geeignete optische Erfassungseinheiten verwendet werden.

Der Mehrlagenchip umfasst drei planare Schichten:

Eine dem Dunkelfeld-Mikroskop zugewandte Schicht wirkt als optisch transparentes Detektionsmedium und schützt und trägt bzw. stabilisiert die angrenzende Schicht mit den plasmonischen Nanostrukturen. Die Dicke der Schicht ist vor allem abhängig von der angestrebten mechanischen Stabilität. Als Material ist bspw. PMMA oder Borofloat-Glas 33 möglich.

Eine mittlere Schicht wirkt als optisch transparentes Einbettungsmedium für mindestens eine plasmonische Nanostruktur, die an der Oberfläche zum Detektionsmedium eingebracht ist. Die durchgehende gegenüberliegende Seite der mittleren Schicht trennt und schützt die plasmonischen Nanostrukturen gegenüber den Substanzen im Kapillarkanal, der in der angrenzenden Schicht verläuft. Die Dicke des Einbettungsmediums der mittleren Schicht summiert sich aus der Höhe der eingebetteten plasmonischen Nanostrukturen und der Dicke unter diesen bis zum Kapillarkanal. Die Höhe der eingebetteten plasmonischen Nanostrukturen beträgt 15 bis 80 nm. Die Dicke des Mediums zwischen den Nanostrukturen und dem Kanal beträgt vorzugsweise einen Bruchteil der Wellenlänge des Anregungslichtes, bspw. 120 nm, und ist abhängig von der Höhe des Kapillarkanals. Im Rahmen der Erfindung liegt auch, dass die plasmonischen Nanostrukturen vollständig vom Einbettungsmedium umschlossen sind.

Die plasmonischen Nanostrukturen sind als Nanostrukturen unter Verwendung von Metallen oder Halbleitern wie bspw. Gold, Silber, Aluminium, Kupfer, dotiertem Silizium oder Nickel/Chrom ausgeführt. Die Formen der plasmonischen Nanostrukturen umfassen u.a. Kugeln, Zylinder, Kreisscheiben, Linsen und Stäbe. Ihre größten Ausdehnungen betragen etwa 15 bis 150 nm. Als Einbettungsmaterial der plasmonischen Nanostrukturen wird bspw. PMMA oder $SiO_2$ verwendet. Die Höhe des Einbettungsmediums bzw. der mittleren Schicht liegt zwischen 30 und 200 nm.

Eine dritte Schicht besteht aus einem optisch nicht transparenten Medium oder sollte vorzugsweise gegen Fremdlicht von außen geschützt werden. Sie wirkt als Trägermedium für den Kapillarkanal, der in die Oberfläche des Trägermediums eingebracht ist, die an die mittlere Schicht angrenzt. Die den plasmonischen Nanostrukturen gegenüberliegende Seite des Kapillarkanals ist als reflektierende Fläche ausgeführt. Die Dicke des Trägermediums summiert sich aus der Höhe des Kapillarkanals und der Dicke des Trägermediums darunter einschließlich der reflektierenden Fläche. Die Höhe des Kapillarkanals beträgt vorzugsweise einen Bruchteil der Wellenlänge des Anregungslichtes, bspw. 120 nm, und ist abhängig von der Dicke des Einbettungsmediums zwischen den Nanostrukturen und dem Kapillarkanal.

Die Höhe des Kapillarkanals liegt zwischen 30 bis 1900 nm.

Die für die Ausbildung des Kapillarkanals mit der gegebenen Höhe erforderlichen, flächigen Abstandshalter mit Aussparungen im Bereich des Sensorelementes können wahlfrei in eine der drei genannten Schichten integriert bzw. durch Beschichtung derselben hergestellt werden. Zur Vermeidung eines für den Betrieb unvorteilhaften hohen Druckabfalls im Zuleitungsbereich empfiehlt sich für die Zuleitungskanäle die Verwendung von Kanalstrukturen mit gegenüber der Sensorstruktur vergrößerten Kanalquerschnitten (z.B. Breite 200 μm, Tiefe 50 μm).

Für eine vorgegebene Wellenlänge der maximalen konstruktiven Interferenz ergeben sich die geometrischen Rahmenbedienungen der Anordnung aus den nachfolgenden Relationen:

$$D_M * n_M + h_{MC} * n_{Fluid} = N * ½ * λ,$$

wobei

$D_M$ = Schichtdicke des Einbettungsmediums zwischen der plasmonischen Nanostruktur und dem Kapillarkanal,
$n_M$ = Brechungsindex des Einbettungsmediums,
$h_{MC}$ = Höhe des Kapillarkanals,
$n_{Fluid}$ = Brechungsindex des Fluides,
$λ$ = Wellenlänge der maximalen konstruktiven Interferenz,
N = Zahl für das Vielfache von $λ$ mit N= 1, 2, 3, 4, ...

ist.

Bei der Auslegung ist zu berücksichtigen, dass die Effizienz der Interferenz mit zunehmendem N abnimmt. Optimale Sensitivität wird für N = 1 erhalten. Für N > 4 sinkt die Effizienz der Interferenz unter einen in der Praxis akzeptablen Wert.

Die Anordnung ist für weißes, monochromatisches oder polycromatisches Anregungslicht mit Wellenlängen innerhalb eines Wellenlängenbereiches von 330 nm bis 1050 nm konzipiert. Diese Grenzen sind vor allem durch die Transparenz der verwendeten inerten transparenten Medien, also der Chipmaterialien, bestimmt. Mit geeigneten Materialien für die inerten transparenten Medien und die plasmonischen Nanostrukturen kann der Wellenlängenbereich des Anregungslichtes ausgeweitet werden.

Die Länge und Breite des Kapillarkanals bestimmen den Grad der Empfindlichkeit/Genauigkeit und der Parallelisierung.

Ein 60 μm langer Kapillarkanal ermöglicht zum Beispiel eine Anordnung von 60 plasmonischen Nanostrukturen in Flussrichtung bei ca. 1 μm Abstand zueinander. Ein Partikel kann so in Flussrichtung 60mal detektiert werden.

Ein 5 mm breiter Kapillarkanal ermöglicht zum Beispiel eine Anordnung von 5000 plasmonischen Nanostrukturen quer zur Flussrichtung bei ca. 1 μm Abstand zueinander. Es können so 5000 Messorte nebeneinander und somit insgesamt 300000 Messorte parallel überwacht werden.

In der Praxis werden minimale Abstände der plasmonischen Nanostrukturen zueinander von 0,7 μm erreicht. Die plasmonischen Nanostrukturen im Einbettungsmedium sind mit einem Abstand von minimal 0,7 μm angeordnet.

Die reflektierende Fläche an der den plasmonischen Nanostrukturen gegenüberliegende Seite des Kapillarkanals ist durch eine Beschichtung mit Metallen wie Gold, Nickel/Chrom und anderen für die Wellenlänge der maximalen konstruktiven Interferenz hochreflektierenden Materialien ausgeführt. Alternativ könnte in einer nicht von den Ansprüchen umfassten Ausführung für das Trägermedium ein Material gewählt werden, das ohne eine Beschichtung eine reflektierende Fläche ausbildet, z.B. Silizium.

Eine Parallelisierung der Erfassung ist durch den Einsatz mehrerer plasmonischer Einzelsensoren nebeneinander möglich. Ein plasmonischer Einzelsensor besteht aus einer in das Einbettungsmedium eingebrachten plasmonischen Nanostruktur, dem angrenzenden Kapillarkanal und der an dessen Unterseite befindlichen reflektierenden Fläche. Durch den Einsatz mehrerer plasmonischer Einzelsensoren, vorzugsweise als Matrix über dem Kapillarkanal angeordnet, ist eine gleichzeitige Messung an mehreren Orten in einem Kapillarkanal möglich, was eine einfache Parallelisierbarkeit bedeutet.

Prinzipiell ist es möglich, Systeme mit einer Sensordichte von mehr als 1.5 Millionen Sensoren pro mm$^2$ herzustellen. So wurde bspw. eine Anordnung mit einer Sensordichte von 1 Millionen Sensorstrukturen pro mm$^2$ auf einer Sensorfläche von 40 x 5000 μm$^2$ realisiert. Die Größe des Detektionsfeldes ist abhängig von der Optik des Erfassungseinheit, z.B. des Dunkelfeld-Mikroskops. So können bspw. bei einem Detektionsfeld von 40 x 120 μm$^2$ 4800 Sensorelementen parallel ausgelesen werden. Gegenüber dem Stand der Technik für die Fluoreszenz-Korrelations-Spektroskopie ergibt sich damit eine Potenzierung des Informationsgehaltes.

Das Anregungslicht kann als spektral breitbandiges Licht (weißes Licht), als Licht einer bestimmten Wellenlänge (monochromatisches Licht) oder als Licht mit mehreren diskreten Wellenlängen (polychromatisches Licht) bereitgestellt werden. Es wird so eingestrahlt, dass nur das resultierende Streulicht von der Anordnung (plasmonische Nanostruktur, Kapillarkanal und reflektierende Fläche) im Dunkelfeld detektiert werden kann. Dazu können die aus der Dunkelfeld-Mikroskopie vorbekannten Lichtquellen und Verfahren verwendet werden.

Das Anregungslicht der Dunkelfeld-Lichtquelle der Dunkelfeld-Konfiguration kann

- als im Winkel auf den Chip einfallendes Auflicht,
- als im Winkel auf den Chip einfallendes Auflicht mit einer Einkoppeloptik oder
- in mindestens eine der Seitenflächen des Chips unter Nutzung des Mehrlagenchips als Schichtwellenleiter für die Führung des Lichtes von der Einkoppelstelle zu den plasmonischen Nanostrukturen

eingekoppelt werden.

Die Bereitstellung und Einkopplung des Anregungslichtes einer Dunkelfeld-Lichtquelle einer Dunkelfeld-Konfiguration an sich ist bekannt.

Das Verfahren gemäss Anspruch 3 beruht auf der Erfassung von Änderungen der optischen Weglänge in dem Kapillarkanal. Dazu wird weißes, monochromatisches oder polychromatisches Licht einer Dunkelfeld-Konfiguration in den Mehrlagenchip der Anordnung gemäss Anspruch 1 oder Anspruch 2 eingekoppelt. Weiterhin wird ein Fluid über den Fluid-Zufluss zugeführt und über den Fluid-Abfluss abgeführt. Möglich ist die Zusammenführung zweier oder mehrerer Fluide mit oder ohne Partikeln am Fluid-Zufluss, so dass der Kapillarkanal als Reaktionsraum wirkt.

Das Fluid, mit oder ohne Partikel, kann

- in den Kapillarkanal nur eingeführt werden und verbleibt dort stationär während der Detektion,
- stetig durch den Kapillarkanal strömen oder
- in einem Flow-Stop-Regime zeitweise bewegt und nicht bewegt werden.

Druck und Temperatur des Fluids können eingestellt werden oder sind zu ermittelnde Zielgrößen. So kann aus einer Änderung der optischen Weglänge auf eine Änderung von Temperatur und/oder Druck geschlossen werden. Weiterhin kann auf den Kapillarkanal mechanisch eingewirkt werden, indem Druck oder Unterdruck/Zug auf den Mehrlagenchip ausgeübt wird, wodurch die optische Weglänge rein mechanisch verändert wird. Die Aufnahme der Farb- und Helligkeitswerte und -änderungen an den plasmonischen Nanostrukturen erfolgt im Dunkelfeld.

Die Anwendungen der Anordnung und des Verfahrens erfolgen durch die Bestimmung der Betriebsparameter (Eigenschaften des Fluids, Flussregime, mechanische Einwirkung, Anregungslicht, Geometrie des Mehrlagenchips) und die Art der Auswertung der aufgenommenen Informationen. Sie definieren den jeweiligen Charakter und die Möglichkeiten der Verwendung des Sensors, zum Beispiel:

1. Betrieb als Durchflusssensor für die parallele Erfassung aller analytischer Spezies und deren raum-zeitliche Bewegung durch den Messaufbau, ohne Notwendigkeit einer Bindung an den Sensor und/oder eines Fluoreszenz-Labelings der analytischen Spezies;

2. Betrieb als Bindungsdetektor für die hoch parallele Erfassung von Bindungsereignisse zwischen unmarkierten analytischen Spezies, bspw. Proteine, und deren raum-zeitliche Bewegung durch den Messaufbau; die Bindung zwischen zwei Ausgangs-Spezies erzeugt eine neue Spezies mit veränderter Größe und verändertem Beitrag zum Brechungsindex im Messvolumen; infolgedessen wird die neu gebildete Spezies zusätzlich zu den Ausgangs-Spezies detektiert;

3. Betrieb des Systems im Stop-Flow-Regime, wobei im Stop-Regime die durch die Brownsche Molekularbewegung der analytischen Spezies hervorgerufene Ortsveränderung und Verweilzeit im Wirkbereich einer einzelnen Sensorstruktur vermessen wird;

4. Verfahren gemäß 3., bei welchem Algorithmen der Korrelationsspektroskopie auf die gemäß in Punkt 3. erhaltenen Rohdaten angewandt und für die Ermittlung von Konzentration, Mobilität und Bindungskonstanten zwischen den Spezies genutzt werden;

5. Betrieb als mechanischer Drucksensor/Wegsensor im nm-Bereich; auch, zusammen mit einem Trägheitselement an mindestens einer Außenfläche des Mehrlagenchips, als Beschleunigungssensor, bspw. für die Airbag-Auslösung in der Fahrzeugtechnik;

6. Betrieb als Detektor von Veränderungen in einem Fluid, zum Beispiel Konzentrationsveränderungen von gelösten Substanzen, Temperaturveränderungen oder Druckveränderungen, sofern dies mit einer Änderung des optischen Brechungsindex einhergeht.

Im Gegensatz zu Fabry-Perot-Interferometern oder interferometrischen Standard-Detektionsmethoden können die plasmonischen Nanostrukturen in der hier beschriebenen Anordnung mit Abmessungen im Größenbereich 15-150 nm und einem daraus abgeleiteten Detektionsvolumen (Kapillarkanalhöhe bspw. 120 nm; Detektionsvolumen = 120 nm x 15-150 nm x 15-150 nm) solche Objekte, wie bspw. große Proteine, Vesikel (bspw. Endosome oder Exosome) oder Viren im Größenbereich von 30 nm, wesentlich empfindlicher detektieren. Auch können Informationen, welche auf der durch die Brownsche Molekularbewegung hervorgerufene Ortsveränderung und Verweilzeit der Objekte im Detektionsvolumen basieren, überhaupt erst gewonnen werden, da das aktive Detektionsvolumen, über welches die Brechungsindexänderung gemittelt wird, wesentlich näher am Größenbereich der Objekte liegt.
Die Erfassung und Auswertung im Dunkelfeld ist aus dem Stand der Technik bekannt.
Die für die Fluoreszenz-Korrelations-Spektroskopie entwickelten und bekannten Algorithmen können direkt für die Signalanalyse der gewonnenen Messdaten eingesetzt werden. Somit sind die für eine Anwendung des Verfahrens erforderlichen Algorithmen bekannt und zum Teil als Softwarepakete verfügbar, was von Vorteil ist.
Die Erfindung wird nachstehend an Hand der Figuren und des Ausführungsbeispiels näher erläutert, ohne die Erfindung auf diese zu beschränken. Dabei zeigen:

Fig. 1:     eine schematische Darstellung einer Ausführungsform der Anordnung in einer seitlichen Schnittansicht,

Fig. 2:     eine schematische Darstellung der Anordnung gemäß Fig. 1 in Draufsicht,

Fig. 3:     eine schematische Darstellung des Messprinzips unter Verwendung einer weiteren Ausführungsform der Anordnung ohne Partikel im Fluid und

Fig. 4:     eine schematische Darstellung des Messprinzips unter Verwendung einer weiteren Ausführungsform der Anordnung mit Partikel im Fluid.

Die Anordnung umfasst einen Mehrlagenchip für die Erfassung von Änderungen der optischen Weglänge in einem Kapillarkanal, für dessen Betrieb eine Dunkelfeld-Konfiguration und ein Dunkelfeld-Mikroskop oder eine andere geeignete optische Erfassungseinheit notwendig sind. Die Dunkelfeld-Lichtquelle und das Dunkelfeld-Mikroskop sind in den Figuren nicht abgebildet, lediglich das Dunkelfeld-Objektiv des Dunkelfeld-Mikroskops wird schematisch gezeigt.

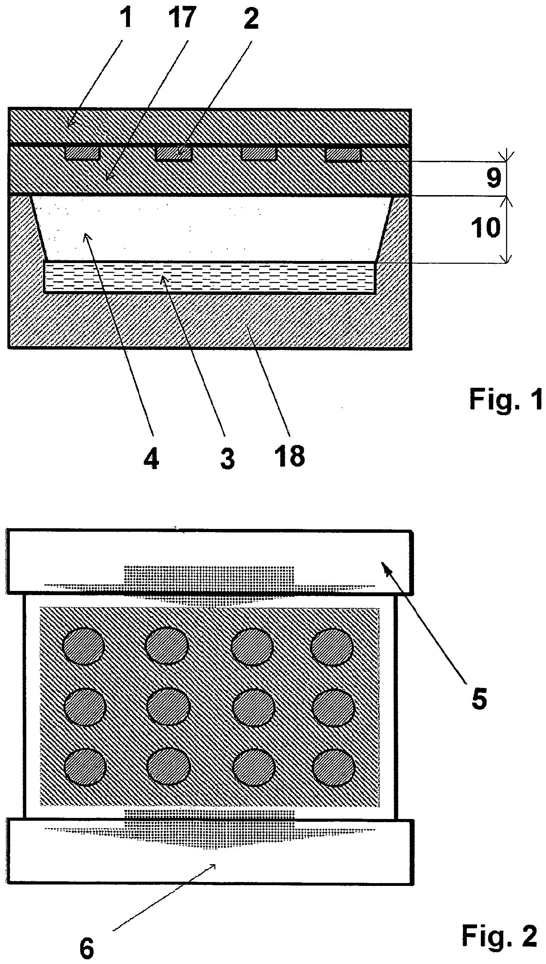

Der Mehrlagenchip umfasst, wie in Fig. 1 gezeigt, drei planare Schichten (1, 17, 18). Die Länge des Mehrlagenchips in Flussrichtung beträgt 60 $\mu$m und die Breite beträgt 5 mm.

Der Mehrlagenchip wird durch weißes Licht (7) aus einer Dunkelfeld-Konfiguration angeregt.

Die dem Dunkelfeld-Mikroskop zugewandte Schicht (1) wirkt als optisch transparentes Detektionsmedium (1) und schützt die darunter liegende, mittlere Schicht (17) mit den plasmonischen Nanostrukturen (2). Die Dicke der Schicht (1) beträgt 0,5 mm. Das Detektionsmedium (1) besteht aus Borofloat-Glas 33.

Die zweite, mittlere Schicht (17) wirkt als optisch transparentes Einbettungsmedium (17) für die plasmonischen Nanostrukturen (2), die an der Oberfläche zum Detektionsmedium (1) eingebracht sind. Die durchgehende gegenüberliegende Seite der mittleren Schicht (17) trennt und schützt die plasmonischen Nanostrukturen (2) gegenüber den Substanzen im Kapillarkanal (4), der in der angrenzenden dritten Schicht (18) verläuft. Die Höhe der eingebetteten plasmonischen Nanostrukturen (2) beträgt 80 nm. Der Durchmesser der eingebetteten plasmonischen Nanostrukturen (2) beträgt 50 nm. Der Abstand zwischen den eingebetteten plasmonischen Nanostrukturen (2) beträgt 1 $\mu$m. Die Dicke (9) des Einbettungsmediums (17) zwischen den Nanostrukturen (2) und dem Kapillarkanal (4) beträgt 100 nm. Somit beträgt die Dicke des Einbettungsmediums (17) insgesamt 180 nm. Das Einbettungsmedium (17) besteht aus $SiO_2$.

Die plasmonischen Nanostrukturen (2) sind metallische Nanostrukturen unter Verwendung von Gold. Die Form der plasmonischen Nanostrukturen (2) entspricht etwa der eines Zylinders. Die Resonanz der plasmonischen Nanostrukturen (2) liegt bei einer Wellenlänge von 560 nm.

Die dritte Schicht (18) wirkt als Trägermedium (18) für den Kapillarkanal (4), der in die Oberfläche des Trägermediums (18) eingebracht ist, die an die mittlere Schicht (17) angrenzt. Die den plasmonischen Nanostrukturen (2) gegenüberliegende Seite des Kapillarkanals (4) ist als reflektierende Fläche (3) ausgeführt. Die Höhe (10) des Kapillarkanals (4) beträgt 100 nm. Die Länge des Kapillarkanals (4) in Flussrichtung beträgt 60 $\mu$m. Die Breite des Kapillarkanals (4) beträgt 5 mm. Die Dicke des Trägermediums (18) insgesamt beträgt 0,5 mm.

Das Trägermedium (18) besteht aus Borofloat-Glas. Die reflektierende Fläche besteht aus einer Nickel/Chrom-Metallisierung auf der den Kanal bildenden Oberfläche des Trägermediums (18).

Für eine vorgegebene Resonanzwellenlänge von 560 nm besteht für Wasser als Medium und N = 1 somit die nachfolgende Relation:

$$D_M * n_M + h_{MC} * n_{Fluid} = N * \tfrac{1}{2} * \lambda$$

$$100\,\text{nm} * 1{,}47 + 100\,\text{nm} * 1{,}33 = \tfrac{1}{2} * 560\,\text{nm}$$

wobei

DM = Schichtdicke (9) des Einbettungsmediums (17) zwischen der plasmonischen Nanostruktur (2) und dem Kapillarkanal (4)
nM = Brechungsindex des Einbettungsmediums (17)
hMC = Höhe (10) des Kapillarkanals (4)
nFluid = Brechungsindex des Fluides
$\lambda$ = Wellenlänge der maximalen konstruktiven Interferenz
N = Zahl für das Vielfache von $\lambda$

ist.

Bei dem Verfahren für die Erfassung von Änderungen der optischen Weglänge in einem Kapillarkanal (4) wird im Ausführungsbeispiel weißes Licht einer Dunkelfeld-Lichtquelle einer Dunkelfeld-Konfiguration in den Mehrlagenchip als im Winkel zugeführtes Auflicht (7) eingekoppelt. Weiterhin wird Wasser als Fluid über den Fluid-Zufluss (5) zugeführt und über den Fluid-Abfluss (6) abgeführt. Mit einem Dunkelfeld-Mikroskop wird das resultierende interferierende Streulicht aus dem direkt zum Dunkelfeld-Objektiv plasmonisch gestreuten Licht (11) und dem zum Kapillarkanal plasmonisch gestreuten und an der reflektierenden Fläche reflektierten Licht (12) aufgenommen.

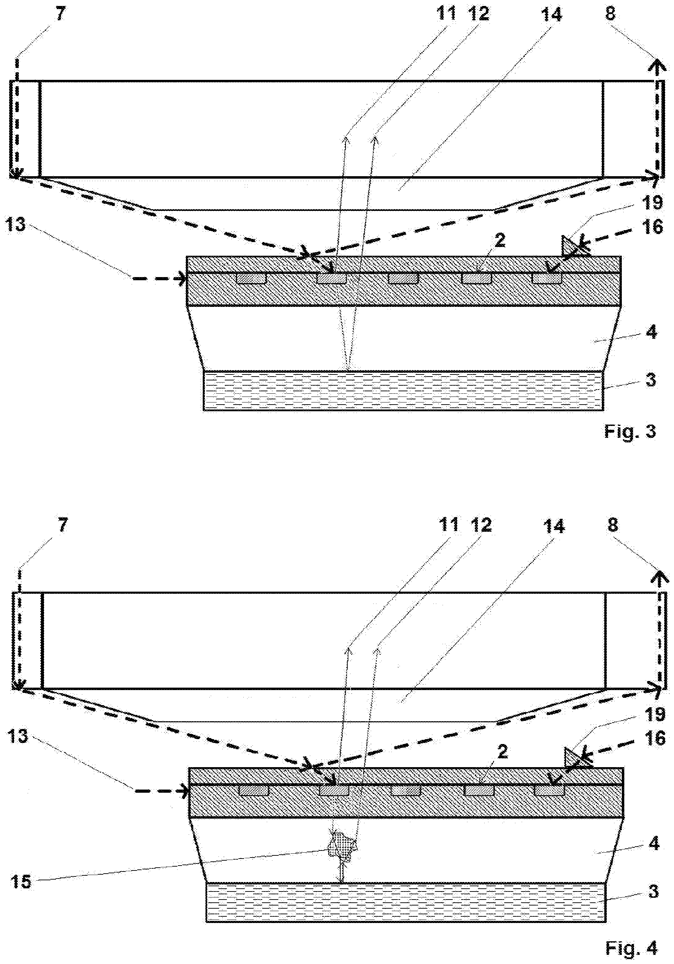

In der Fig. 3 erfährt das Fluid im Kapillarkanal (4) eine Druckänderung durch eine Erhöhung des Drucks am Fluid-Zufluss (5), wodurch sich die Höhe des Kapillarkanals (4) vergrößert im Rahmen der Elastizität der Materialien und Schichtverbindungen, die den Kapillarkanal (4) bilden. Dadurch verändert sich die optische Weglänge des Lichtes im Kapillarkanal (4), wodurch es zu einer Verschiebung der Resonanzwellenlänge im Kapillarkanal (4) und damit zu einer Verschiebung des Spektrums des Lichtes (12), einer Rotverschiebung, kommt. Das wird durch eine Rot-Verschiebung im resultierenden interferierenden Streulicht im Dunkelfeld-Mikroskop sichtbar.

In der Fig. 4 werden in das Fluid im Kapillarkanal (4) Partikel (15) eingebracht, wodurch sich im Bereich des Partikels (15) der Brechungsindex des Fluides verändert. Dadurch verändert sich die optische Weglänge des Lichtes im Kapillarkanal (4), wodurch es zu einer Verschiebung der Resonanzwellenlänge im Kapillarkanal (4) und damit zu einer Verschiebung des Spektrums des Lichtes (12) kommt. Das wird durch eine Farb-Verschiebung im resultierenden interferierenden Streulicht im Dunkelfeld-Mikroskop sichtbar.

Derselbe Effekt tritt ein, wenn sich der Brechungsindex durch andere Ursachen ändert, wie zum Beispiel durch die Zugabe von Glycerin in das wässrige Fluid oder durch einen mechanischen Druck auf den Mehrlagenchip, wobei die Höhe (10) des Kapillarkanals verändert wird.

Alle in der Beschreibung, den Ausführungsbeispielen und den nachfolgenden Ansprüchen dargestellten Merkmale können sowohl einzeln als auch in beliebiger Kombination miteinander erfindungswesentlich sein.

Bezugszeichenliste

1      - obere Schicht, Detektionsmedium

2      - plasmonische Nanostruktur

3      - reflektierende Fläche

4      - Kapillarkanal

5      - Fluid-Zufluss

6      - Fluid-Abfluss

7      - Anregungslicht

8      - reflektiertes Anregungslicht

9      - Dicke des Einbettungsmediums zwischen plasmonischen Nanostrukturen und dem Kapillarkanal

10     - Höhe des Kapillarkanals

11     - direkt zum Dunkelfeld-Objektiv plasmonisch gestreutes Licht

12     - zum Kapillarkanal plasmonisch gestreutes Licht, reflektiert an der reflektierenden Fläche

13     - alternatives Anregungslicht I

14     - Dunkelfeld-Objektiv

15     - Partikel

16     - alternatives Anregungslicht II

17     - mittlere Schicht, Einbettungsmedium

18     - untere Schicht, Trägermedium

19     - Einkoppeloptik

**Patentansprüche**

1.  Anordnung in Form eines Mehrlagenchips in Mikrofluid-Technologie umfassend drei planare Schichten (1, 17 und 18) mit optischen Brechungsindexen, welche als

- ein tragendes, optisch transparentes Detektionsmedium (1),
- ein optisch transparentes Einbettungsmedium (17), enthaltend plasmonische Nanostrukturen (2), und
- ein Trägermedium (18) mit einem Kapillarkanal (4), der in die an das Einbettungsmedium (17) angrenzende Oberfläche eingebracht ist, und der einen Fluid-Zu- (5) und -Abfluss (6) besitzt, ausgeführt sind,

wobei die plasmonischen Nanostrukturen eine Resonanzfrequenz zwischen 330 nm und 1050 nm mit einer Streulicht-Bandbreite um die Resonanz herum aufweisen,
wobei der Kapillarkanal (4) an seiner den plasmonischen Nanostrukturen (2) gegenüberliegenden Seite als reflektierende Fläche (3) für Anregungslicht (7) einer Dunkelfeldlichtquelle einer Dunkelfeld-Konfiguration ausgeführt ist, wobei

- die Höhe der eingebetteten plasmonischen Nanostrukturen 15 - 80 nm beträgt
- die plasmonischen Nanostrukturen unter Verwendung von Metallen oder Halbleitern in Form von Gold, Silber, Aluminium, Kupfer, dotiertem Silizium oder Nickel/Chrom ausgeführt sind,

wobei, bei Verwendung der Anordnung,

- das Anregungslicht (7) weißes oder monochromatisches oder polychromatisches Licht mit Wellenlängen innerhalb eines Wellenlängenbereiches von 330 nm und 1050 nm ist, und
- die Wellenlänge des monochromatischen Anregungslichtes (7) innerhalb der Bandbreite des Streulichtes der plasmonischen Nanostrukturen (2) liegt und die Wellenlängen des weißen oder polychromatischen Anregungslichtes (7) zumindest auch innerhalb der Bandbreite des Streulichtes der plasmonischen Nanostrukturen (2) liegen;

**dadurch gekennzeichnet, dass**

- eine optische Weglänge von den plasmonischen Nanostrukturen (2) bis zur reflektierenden Fläche (3) im Kapillarkanal (4) unter Berücksichtigung der optischen Brechungsindexe das 0,5-fache oder das N * 0,5-fache der Wellenlänge der maximalen konstruktiven Interferenz des Anregungslichts (7) und von der reflektierende Fläche (3) kommenden Lichts beträgt mit N als Ganzzahl größer gleich 1,

wobei die Wellenlänge für die maximale konstruktive Interferenz gleich oder nahezu gleich der Resonanzwellenlänge der plasmonischen Nanostrukturen (2) ist und jedenfalls innerhalb der Streulicht-Bandbreite der plasmonischen Nanostrukturen (2) liegt,

- die Dicke des Einbettungsmediums (17) zwischen 30 und 200 nm liegt und
- die Höhe des Kapillarkanals (4) zwischen 30 und 1900 nm liegt, wobei

• die plasmonischen Nanostrukturen (2) in ihren größten Ausdehnungen etwa 15 bis 150 nm groß sind,
• die plasmonischen Nanostrukturen (2) im Einbettungsmedium (17) mit einem Abstand von minimal 0,7 $\mu$m angeordnet sind und
• die reflektierende Fläche (3) an der den plasmonischen Nanostruktur (2) gegenüberliegende Seite des Kapillarkanals (4) durch eine Beschichtung mit Metallen in Form von Gold, Nickel/Chrom und anderen für die Wellenlänge der maximalen konstruktiven Interferenz hochreflektierenden Materialien ausgeführt ist.

2. Anordnung gemäß Anspruch 1, **dadurch gekennzeichnet, dass** für eine vorgegebene Wellenlänge der maximalen konstruktiven Interferenz die nachfolgende Relation gilt:

$$D_M * n_M + h_{MC} * n_{Fluid} = N * \tfrac{1}{2} * \lambda,$$

wobei

- $D_M$ = Schichtdicke (9) des Einbettungsmediums (17) zwischen der plasmonischen Nanostruktur und dem Kapillarkanal (4),
- $n_M$ = Brechungsindex des Einbettungsmediums (17),
- $h_{MC}$ = Höhe (10) des Kapillarkanals (4),
- $n_{Fluid}$ = Brechungsindex des Fluides,

- λ = Wellenlänge maximalen konstruktiven Interferenz und
- N = Zahl für das Vielfache von λ ist.

3. Verfahren unter Verwendung der Anordnung in Form eines Mehrlagenchips in Mikrofluidtechnologie gemäß einem oder mehrerer der Ansprüche 1 oder 2, bei dem

- Anregungslicht aus einer Dunkelfeld-Konfiguration in den Mehrlagenchip eingekoppelt wird,
- ein Fluid in den Kapillarkanal (4) eingebracht wird, wobei ein Fluid mit oder ohne Partikel (15) verwendet wird und

  ▪ das Fluid in den Kapillarkanal (4) nur eingeführt wird und dort stationär verbleibt oder
  ▪ das Fluid stetig durch den Kapillarkanal (4) strömt oder
  ▪ das Fluid in einem Flow-Stop-Regime im Kapillarkanal (4) zeitweise bewegt und nicht bewegt wird, und

- ein Dunkelfeld-Mikroskop oder eine andere optische Erfassungseinheit ein interferierendes Streulicht detektiert, das sich aus der Überlagerung des an den plasmonischen Nanostrukturen (2) resonant und direkt zum Detektor gestreuten Lichts und des zum Kapillarkanal gestreuten und an dessen refelektierender Fläche (3) zurückgeworfenen Lichts ergibt.

4. Verfahren gemäß Anspruch 3, **dadurch gekennzeichnet, dass** eine Änderung der optische Weglänge von den plasmonischen Nanostrukturen (2) bis zur reflektierenden Fläche (3) im Kapillarkanal (4) hervorgerufen wird durch

- eine Veränderung des Brechungsindex des Fluides im Kapillarkanal (4) durch die Veränderung der chemischen Zusammensetzung des Fluides oder
- eine Veränderung des Brechungsindex im Kapillarkanal (4) durch das Auftreten, die Bewegung oder die Veränderung von Partikeln im Fluid, wobei die Partikel einen anderen optischen Brechungsindex besitzen als das Fluid, oder
- eine Veränderung des Brechungsindex im Kapillarkanal (4) durch die Veränderung der physikalischen Bedingungen im Kapillarkanal (4) oder im Mehrlagenchip oder
- eine Veränderung der Geometrie des Kapillarkanals (4) durch Druck oder Zug auf den Mehrlagenchip oder
- durch eine Kombination der oben genannten Veränderungen.

5. Verfahren gemäß Anspruch 3 oder 4, **dadurch gekennzeichnet, dass** das Anregungslicht

- als im Winkel auf den Mehrlangenchip einfallendes Auflicht (7) in das Detektionsmedium (1) eingekoppelt wird oder
- als seitlich auf den Mehrlagenchip einfallendes Auflicht mit einer Einkoppeloptik (19) in das Detektionsmedium (1) eingekoppelt wird oder
- in mindestens eine der Seitenflächen des Einbettungsmediums (17) des Mehrlagenchips eingekoppelt wird, wobei der Mehrlangenchip als Schichtwellenleiter für die Führung des Lichtes von der Einkoppelstelle zu den plasmonischen Nanostrukturen (2) dient.

## Claims

1. An arrangement in the form of a multilayer chip in microfluid technology comprising three planar layers (1, 17 and 18) with optical refractive indices which are designed as

- a carrying, optically transparent detection medium (1),
- an optically transparent embedding medium (17), containing plasmonic nanostructures (2), and
- a carrier medium (18) with a capillary channel (4) which is provided in the surface adjacent to the embedding medium (17) and has a fluid inlet (5) and a fluid outlet (6),
wherein the plasmonic nanostructures (2) have a resonance frequency between 330 nm and 1050 nm with a scattered light bandwidth around the resonance, wherein the side of the capillary channel (4) positioned opposite to the plasmonic nanostructures (2) is designed as a reflecting surface (3) for excitation light (7) of a dark field light source of a dark field configuration, wherein

  - the height of the embedded plasmonic nanostructures (2) ranges from 15 to 18 nm,
  - the plasmonic nanostructures (2) are made by using metals or semiconductors in the form of gold, silver, aluminium, copper, doped silicon or nickel / chromium,

wherein during the use of the arrangement

- the excitation light (7) is white or monochromatic or polychromatic light with wavelengths in a wavelength range of 330 and 1050 nm, and
- the wavelength of the monochromatic excitation light (7) is within the bandwidth of the scattered light of the plasmonic nanostructures (2), and the wavelengths of the white or polychromatic excitation light (7) are at least also within the bandwidth of the scattered light of the plasmonic nanostructures (2),

**characterized in that**, taking into account the optical refractive indices, an optical path length from the plasmonic nanostructures (2) to the reflecting surface (3) in the capillary channel (4) is 0.5 times or N * 0.5 times the wavelength of the maximum constructive interference of the excitation light (7) and the light coming from the reflecting surface (3), with N being an integer greater than or equal to 1, wherein

- the wavelength for the maximum constructive interference is equal or almost equal to the resonance wavelength of the plasmonic nanostructures (2) and in any case within the scattered light bandwidth of the plasmonic nanostructures (2),
- the thickness of the embedding medium (17) is between 30 and 200 nm, and
- the height of the capillary channel (4) ranges between 30 and 1900 nm, wherein

• the largest dimensions of the plasmonic nanostructures (2) are about 15 to 150 nm,
• the plasmonic nanostructures (2) are arranged in the embedding medium (17) at a minimum distance of 0.7 μm to each other, and
• the reflecting surface (3) on the side of the capillary channel (4) opposite the plasmonic nanostructures (2) is made by a coating of metals in the form of gold, nickel / chromium and other materials which are highly reflecting for the wavelength of the maximum constructive interference.

2. The arrangement according to claim 1, **characterized in that** the following relation applies to a specified wavelength of the maximum constructive interference;

$$D_M * n_M + h_{MC} * n_{Fluid} = N * \tfrac{1}{2} * \lambda,$$

where

- $D_M$ = layer thickness (9) of the embedding medium (17) between the plasmonic nanostructure and the capillary channel (4),
- $n_M$ = refraction index of the embedding medium (17),
- $h_{MC}$ = height (10) of the capillary channel (4),
- $n_{Fluid}$ = refraction index of the fluid,
- $\lambda$ = wavelength of the maximum constructive interference, and
- N = number for the multiple of $\lambda$.

3. A method using the arrangement in the form of a multilayer chip in microfluid technology according to one or more of the claims 1 or 2, in which

- excitation light from a darkfield configuration is coupled into the multilayer chip,
- a fluid is supplied into the capillary channel (4), wherein a fluid with or without particles (15) is used, and

■ the fluid is only led into the capillary channel (4) and remains stationarily there,
■ the fluid flows continuously through the capillary channel (4), or
■ the fluid is temporarily moved and not moved in a flow-stop regime in the capillary channel (4), and

- a dark field microscope or another optical detection unit detects an interfering scattered light resulting from the superposition of the light scattered resonantly at the plasmonic nanostructures (2) and directly to the detector and the light scattered to the capillary channel and reflected at its reflecting surface (3).

4. The method according to claim 3, **characterized in that** a change in the optical path length from the plasmonic nanostructures (2) to the reflecting surface (3) in the capillary channel (4) is caused by

- a change in the refractive index of the fluid in the capillary channel (4) due to the change in the chemical composition of the fluid, or
- a change in the refractive index in the capillary channel (4) due to the occurrence, movement or change of particles in the fluid, wherein the optical refractive index of the particles is different from that of the fluid, or
- a change in the refractive index in the capillary channel (4) due to the change in the physical conditions in the capillary channel (4) or in the multilayer chip, or
- a change in the geometry of the capillary channel (4) due to pressure or tension on the multilayer chip, or
- by a combination of the changes mentioned above.

5. The method according to claim 3 or 4, **characterized in that** the excitation light

- is coupled into the detection medium (1) as a reflected light (7) incident at an angle onto the multilayer chip, or
- is coupled by an optical probe (19) into the detection medium (1) as a reflected light incident laterally onto the multilayer chip, or
- is coupled into at least one of the lateral surfaces of the embedding medium (17) of the multilayer chip, wherein the multilayer chip serves as a layer waveguide for guiding the light from the coupling point to the plasmonic nanostructures (2).

**Revendications**

1. Système se présentant sous la forme d'une puce multicouche issue de la technologie microfluidique comprenant trois couches planes (1, 17 et 18) avec des indices de réfraction optiques qui sont réalisées comme

- un moyen de détection portant, optiquement transparent (1),
- un milieu d'insertion optiquement transparent (17) contenant des nanostructures plasmoniques (2), et
- un moyen de support (18) avec un canal capillaire (4) qui est introduit dans la surface adjacente au milieu d'insertion (17) et qui possède une entrée (5) et une sortie (6) pour le fluide,

les nanostructures plasmoniques ayant une fréquence de résonance comprise entre 330 nm et 1050 nm avec une largeur de bande de lumière diffusée autour de la résonance, le canal capillaire (4) sur son côté opposé aux nanostructures plasmoniques (2) étant conçu comme une surface réfléchissante (3) pour la lumière d'excitation (7) d'une source de lumière en fond noir d'une configuration en fond noir,

- la hauteur des nanostructures plasmoniques intégrées étant de 15 à 80 nm,
- les nanostructures plasmoniques (2) étant réalisées à l'aide de métaux ou de semi-conducteurs sous forme d'or, d'argent, d'aluminium, de cuivre, de silicium dopé ou de nickel/chrome, cependant lors de l'utilisation du système
- la lumière d'excitation (7) étant une lumière blanche ou monochromatique ou polychromatique dont les longueurs d'onde se situent dans une gamme de longueurs d'onde de 330 et 1050 nm, et
- la longueur d'onde de la lumière d'excitation monochromatique (7) se situant dans la largeur de bande de la lumière diffusée des nanostructures plasmoniques (2) et les longueurs d'onde de la lumière d'excitation blanche ou polychromatique (7) se situant au moins également dans la largeur de bande de la lumière diffusée des nanostructures plasmoniques (2),

est **caractérisé en ce que** la longueur du trajet optique entre les nanostructures plasmoniques (2) et la surface réfléchissante (3) dans le canal capillaire (4), en tenant compte des indices de réfraction optique est égale à 0,5 fois ou N * 0,5 fois la longueur d'onde de l'interférence constructive maximale de la lumière d'excitation (7) et de la lumière provenant de la surface réfléchissante (3), où N est un nombre entier, est supérieur ou égal à 1, où

- la longueur d'onde pour l'interférence constructive maximale est égale ou presque égale à la longueur d'onde de résonance des nanostructures plasmoniques (2) et se situe en tout cas dans la largeur de bande de la lumière diffusée des nanostructures plasmoniques (2),
- l'épaisseur du milieu d'insertion (17) est comprise entre 30 et 200 nm et
- la hauteur du canal capillaire (4) est comprise entre 30 et 1900 nm,

• les nanostructures plasmoniques (2) ayant une taille d'environ 15 à 150 nm à leurs plus grandes extensions,
• les nanostructures plasmoniques (2) étant disposées dans le milieu d'insertion (17) avec un espacement minimal de 0,7 $\mu$m et
• la surface réfléchissante (3) sur le côté du canal capillaire (4) opposé à la nanostructure plasmonique (2) étant constituée d'un revêtement de métaux sous forme d'or, de nickel/chrome et d'autres matériaux hautement réfléchissants pour la longueur d'onde de l'interférence constructive maximale.

2. Système suivant la revendication 1 est **caractérisé en ce que**, pour une longueur d'onde donnée d'interférence constructive maximale, la relation suivante s'applique:

$$D_M * n_M + h_{MC} * n_{fluide} = N * \tfrac{1}{2} * \lambda,$$

où

- $D_M$ = épaisseur de couche (9) du milieu d'insertion (17) entre la nanostructure plasmonique et le canal capillaire (4),
- $n_M$ = indice de réfraction du milieu d'insertion (17),
- $h_{MC}$ = hauteur (10) du canal capillaire (4),
- $n_{fluide}$ = indice de réfraction du fluide,
- $\lambda$ = longueur d'onde d'interférence constructive maximale et
- N = numéro du multiple de $\lambda$.

3. Procédé utilisant le système sous forme d'une puce multicouche en technologie microfluidique suivant une ou plusieurs des revendications 1 ou 2, dans lequel

- la lumière d'excitation provenant d'une configuration en fond noir est introduite dans la puce multicouche
- un fluide est introduit dans le canal capillaire (4), un fluide avec ou sans particules (15) étant utilisé et

  ▪ le fluide étant uniquement introduit dans le canal capillaire (4) et y restant stationnaire ou
  ▪ le fluide circulant en continu dans le canal capillaire (4) ou
  ▪ le fluide circulant en régime d'arrêt de débit dans le canal capillaire (4) étant temporairement déplacé et non déplacé, et

- un microscope à fond noir ou une autre unité de saisie optique détecte une lumière diffusée parasite résultant de la superposition de la lumière diffusée par résonance et directement vers le détecteur au niveau des nanostructures plasmoniques (2) et de la lumière diffusée vers le canal capillaire et réfléchie au niveau de sa surface réfléchissante (3).

4. Procédé suivant la revendication 3 est **caractérisé en ce qu'**une modification de la longueur du trajet optique entre les nanostructures plasmoniques (2) et la surface réfléchissante (3) dans le canal capillaire (4) est causée par

- une modification de l'indice de réfraction du fluide dans le canal capillaire (4) due à la modification de la composition chimique du fluide, ou
- une modification de l'indice de réfraction dans le canal capillaire (4) due à l'apparition, au mouvement ou à la modification de particules dans le fluide, les particules ayant un indice de réfraction optique différent de celui du fluide, ou
- une modification de l'indice de réfraction dans le canal capillaire (4) due à la modification des conditions physiques dans le canal capillaire (4) ou dans la puce multicouche, ou
- une modification de la géométrie du canal capillaire (4) par pression ou tension sur la puce multicouche ou
- par une combinaison des changements ci-dessus.

5. Procédé suivant la revendication 3 ou 4 est **caractérisé en ce que** la lumière d'excitation

- est couplée au moyen de détection (1) sous forme de lumière incidente (7) qui frappe la puce multicouche sous un certain angle ou
- est couplée au moyen de détection (1) sous forme de lumière incidente (7) qui frappe la puce multicouche sur le côté à l'aide d'une sonde optique (19), ou

- est couplée dans au moins une des surfaces latérales du milieu d'insertion (17) de la puce multicouche, la puce multicouche servant de guide d'ondes en couche pour guider la lumière du point de couplage vers les nanostructures plasmoniques (2).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0679251 B1
- WO 02097406 A1
- WO 2008077642 A2
- WO 2005040771 A1
- EP 2853931 A1
- EP 1210581 B1
- EP 2331958 B1
- EP 2017602 B1
- EP 1701152 A2
- EP 1602917 A2
- EP 1581800 B1
- EP 0863395 B1
- EP 1305659 B1
- WO 2010136440 A1
- US 8426152 B2
- EP 2840383 A1
- US 2015103317 A1

**In der Beschreibung aufgeführte Nicht-Patentliteratur**

- **RIGLER, R., ELSON.** Fluorescence Correlation Spectroscopy, Theory and Applicatons. Springer-Verlag, 2001
- Gold-Nanoparticle-Infiltrated Polystyrene Inverse Opals: A Three-Dimensional Platform for Generating Combined Optical Properties. *Chem. Mater.,* 2006, vol. 18
- A spectroscopic refractometer based on plasmonic interferometry. *Journal of Applied Physics,* 2016, vol. 119, 083104
- Tuning of Spectral and Angular Distribution of Scattering from Single Gold Nanoparticles by Subwavelength Interference Layers. *Nano Lett.,* 2014, vol. 14 (2